# EUROPÄISCHE PATENTANMELDUNG

(11) **EP 4 679 033 A1**
(43) Veröffentlichungstag der Anmeldung: **14.01.2026**
(21) Anmeldenummer: 25180660.0
(22) Anmeldetag: 04.06.2025
(51) Int. Cl.: G01C 15/00

(54) **MESSGERÄT**

(30) Priorität: 11.07.2024 DE 202024103864 U
(71) Anmelder: STABILA Messgeräte Gustav Ullrich GmbH, 76855 Annweiler (DE)
(72) Erfinder: KALLABIS, Gabriel, 76848 Spirkelbach (DE); STILZ, Joachim, 74889 Sinsheim (DE)
(74) Vertreter: Stoffregen, Hans-Herbert

(57) **Zusammenfassung**

Die Erfindung bezieht sich auf ein Messgerät (10), aufweisend ein Gehäuse (12) mit Seitenwandungen (18, 20) und Stirnwandung (22) mit einer Öffnung (26) für einen Strahlaustritt. Ein schwenkbar mit dem Gehäuse verbundenes Abdeckelement (28) erstreckt sich in einer Grundstellung entlang der die Öffnung aufweisenden Stirnwandung. Entlang der die Öffnung aufweisenden Seitenwandung ist ein Schiebeelement (40) verschiebbar angeordnet, das bei sich in der Grundstellung befindendem Abdeckelement (28) in eine die Öffnung in der Seitenwandung verschließenden ersten Endstellung verschiebbar ist, wobei bei sich in der ersten Endstellung befindendem Schiebeelement das Abdeckelement unverschwenkbar ist.

## Beschreibung

Die Erfindung bezieht sich auf ein Messgerät, insbesondere Linienlaser, aufweisend ein Gehäuse mit einer ersten und einer zweiten Seitenwandung, einer ersten und einer zweiten Stirnwandung, einer Kopfwandung und einer Bodenwandung, die jeweils Außenflächen aufweisen, wobei eine der Stirnwandungen und zumindest eine an dieser angrenzende Seitenwandung, insbesondere beide Seitenwandungen, eine Öffnung für einen Strahlaustritt aufweisen, ein schwenkbar mit dem Gehäuse verbundenes Abdeckelement, das sich in einer Grundstellung zumindest abschnittsweise entlang der die Öffnung aufweisenden Stirnwandung und der Boden- und/oder Kopfwandung erstreckt, sowie einen Schalter zum An- und Ausschalten des Geräts.

Ein entsprechendes Messgerät ist aus der EP 1 939 588 B1 bekannt. Die Abdeckung, die auch als Halterung dient, weist nach einem Ausführungsbeispiel im Schnitt eine U-Form auf und kann wahlweise eine in der Stirnwandung des Messgerätgehäuses vorhandene Öffnung, die von einem Laserstrahl durchsetzt wird, abdecken oder freigeben. Dabei kann der die Öffnung abdeckende Querschenkel der Abdeckung außenseitig Montagefixiermittel, wie Magnete, aufweisen, um das Gerät in einer gewünschten Stellung positionieren zu können, um sodann Laserstrahlung zu emittieren und z.B. Linien zu projizieren. Im bodenseitig verlaufenden Schenkel der Abdeckung können Anschlussgewinde zum Befestigen des Gerätes auf z.B. einem Stativ vorgesehen sein.

Weist ein Messgerät auch in beiden Seitenwandungen vorhandene Strahlaustrittsöffnungen auf, die ineinander übergehen können, so kann zwar die die Stirnwandung durchsetzende Strahlung durch die Abdeckung abgedeckt werden, jedoch nicht die durch die Seitenwandungen.

Auch besteht die Möglichkeit, dass dann, wenn die Stirnwandung abgedeckt ist, das Gerät angeschaltet ist, wodurch Beschädigungen auftreten könnten.

Der vorliegenden Erfindung liegt die Aufgabe zugrunde, ein Messgerät der eingangs genannten Art so weiterzubilden, dass die Strahlaustrittsöffnung gegen eine Beschädigung bei Nichtnutzung des Gerätes geschützt ist.

Nach einem weiteren Aspekt soll ein unkontrolliertes Einschalten des Gerätes nicht möglich sein.

Zur Lösung zumindest von einem der Aspekte sieht die Erfindung vor, dass entlang der die Öffnung aufweisenden Seitenwandung oder Seitenwandungen ein Schiebeelement verschiebbar angeordnet ist, dass das Schiebeelement bei sich in der Grundstellung befindendem Abdeckelement in eine die Öffnung in der Seitenwandung oder den Seitenwandungen verschließenden ersten Endstellung verschiebbar ist, und dass das Abdeckelement bzw. das Gehäuse bei sich in der ersten Endstellung befindendem Schiebeelement unverschwenkbar ist.

Insbesondere zeichnet sich die Erfindung dadurch aus, dass von entlang der Bodenwandung des Gehäuses verlaufendem Abschnitt des Schiebeelements ein erster Vorsprung ausgeht, dass in einem sich entlang der Bodenwandung erstreckenden Abschnitt des Abdeckelements eine entlang einer Geraden sich erstreckende erste Aussparung verläuft, in der der erste Vorsprung ausschließlich dann verschiebbar ist, wenn das Abdeckelement die Stirnwandung des Gehäuses mit der in dieser vorhandenen Strahlaustrittsöffnung abdeckt, wobei bei Eingriff des ersten Vorsprungs in die erste Aussparung ein Verschwenken des Abdeckelements unterbunden ist und wobei dann, wenn der erste Vorsprung nicht in Eingriff in der ersten Aussparung ist, das Abdeckelement verschwenkbar ausgebildet ist, wobei bei verschwenktem Abdeckelement das Schiebelement unverschiebbar ist.

Durch die erfindungsgemäße Lehre ist sichergestellt, dass bei Nichtnutzung des Gerätes, die Öffnung in der Stirnwandung und die in der zumindest einen Seitenwandung vorhandenen Öffnung, insbesondere die in beiden Seitenwandungen vorhandenen Öffnungen, abgedeckt sind, so dass diese geschützt sind. Z.B. beim Herunterfallen des Gerätes kann insoweit eine Beschädigung nicht erfolgen.

Dabei ist insbesondere vorgesehen, dass das Abdeckelement eine U-Form aufweist, wobei der entlang der die Öffnung aufweisenden Stirnwandung verlaufende Querschenkel in Seitenschenkel übergeht, die entlang der Kopfwandung bzw. der Bodenwandung verlaufen und die ihrerseits von einer Drehachse durchsetzt sind, um die das Abdeckelement bzw. das Gehäuse zu dem Abdeckelement dreh- bzw. schwenkbar ist. Dabei sollte die Drehachse zwischen der ersten Stirnwandung und Außenwandung eines Akkus, der z.B. in einer Aufnahme eingebracht ist, die in der einen Stirnwandung vorgesehen ist, die der der Stirnwandung mit der Öffnung gegenüberliegt, um das Gerät betreiben zu können, derart verlaufen, dass das Abdeckelement problemlos um 360 ° schwenkbar ist, wodurch die Handhabbarkeit vereinfacht wird. Gleichzeitig sollte jedoch der Querschenkel dann, wenn dieser auf die die Öffnung aufweisende Stirnwandung ausgerichtet ist, nahe entlang dieser verlaufen.

Um sicherzustellen, dass das Abdeckelement bzw. das Gehäuse nur dann verschwenkt werden kann, wenn sich das Schiebeelement in der zweiten Grundstellung befindet, also in der, in der die in der zumindest einen Seitenwandung, vorzugsweise in beiden Seitenwandungen, vorhandene Öffnung unbedeckt ist, ist insbesondere vorgesehen, dass die Bodenwandung des Gehäuses einen zapfenförmigen zweiten Vorsprung aufweist oder von diesem durchsetzt ist, der in eine zweite Aussparung, wie Durchgangsöffnung, des zugeordneten Querschenkels des Abdeckelements eingreift, dass die zweite Aussparung von einer Aufnahme konzentrisch umgeben ist, dass von der Aufnahme die in Längsrichtung des Abdeckelements verlaufende erste Aussparung ausgeht, und dass von dem sich entlang der Bodenwandung erstreckenden Schenkel des Schiebelements der erste Vorsprung ausgeht, der ausschließlich in der Grundstellung des Abdeckelements in der ersten Aussparung verstellbar bzw. verschiebbar ist. Hierdurch ist sichergestellt, dass das Schiebeelement nur dann von seiner zweiten Grundstellung in die erste Grundstellung verschoben werden kann, wenn der Querschenkel des Abdeckelements entlang der Stirnwandung des Gehäuses verläuft. Umgekehrt kann das Abdeckelement bzw. das Gehäuse erst dann verschwenkt werden, wenn sich das Schiebeelement in seiner zweiten Grundstellung befindet. Anderenfalls verhindert der in die erste Aussparung eingreifende erste Vorsprung ein Verschwenken des Abdeckelements.

Die Aufnahme weist hierzu eine äußere Begrenzung auf, an der der erste Vorsprung bei aus der Grundposition verschwenktem Abdeckelement anliegt. Hierdurch ist sichergestellt, dass das Schiebeelement bei verschwenktem Abdeckelement nicht aus seiner zweiten Grundstellung heraus verstellt werden kann.

Erfindungsgemäß wird vorgeschlagen, dass die Strahlaustrittsöffnungen in der Stirnwandung und in den beiden Seitenwandungen, die erwähntermaßen ineinander übergehen können, abgedeckt werden, also nicht nur die stirnseitige Strahlaustrittsöffnung.

Ergänzend, gegebenenfalls auch isoliert und eigenerfinderisch, kann sichergestellt sein, dass dann, wenn eine Abdeckung erfolgt, das Gerät weder eingeschaltet ist noch eingeschaltet werden kann.

Hierzu ist das Schiebeelement vorgesehen, das von Hand von seiner ersten Endstellung in eine zweite Endstellung verstellt werden kann. Die erste Endstellung ist dann erreicht, wenn das insbesondere flächig ausgebildete Schiebeelement die Strahlaustrittsöffnung in der Seitenwandung verschließt, wobei insbesondere vorgesehen ist, dass jede der Seitenwandungen eine Strahlaustrittsöffnung aufweist, die sodann von dem Schiebeelement abgedeckt sind, wobei die Strahlaustrittsöffnungen insbesondere ineinander übergehen, so dass problemlos mittels des Gerätes eine Linie an z.B. einer Gebäudewand projiziert werden kann.

Dabei ist dann, wenn sich das Schiebeelement in der zweiten Endstellung befindet, das Messgerät in üblicher Weise ein- und ausschaltbar, also die Funktion des Schalters nicht eingeschränkt.

Um diese Möglichkeit zu schaffen, ist insbesondere vorgesehen, dass der Schalter ein Betätigungselement zum Umschalten des Schalters von seiner Stellung AUS in die Stellung EIN und umgekehrt aufweist, dass das Schiebeelement eine Aussparung aufweist, die von dem Betätigungselement durchsetzt ist und die einen mit dem Betätigungselement wechselwirkenden Mitnehmer aufweist, der bei in der ersten Endstellung sich befindendem Schiebeelement ein Verstellen des Betätigungselements aus der Stellung AUS des Schalters unterbindet, und dass das Schiebelement in seiner zweiten Endstellung, in der die Öffnungen unbedeckt sind, den Schalter freigibt, d.h., dass dieser in seine Stellung EIN verstellbar ist, wobei beim Verschieben des Schiebelements von der zweiten Endstellung in die erste Endstellung bei sich in Stellung EIN befindendem Schalter dieser durch Wechselwirken des Betätigungselementes mit dem Mitnehmer von der Stellung EIN in die Stellung AUS umgeschaltet wird. Somit ist sichergestellt, dass bei abgedeckter Strahlaustrittsöffnung das Gerät ausgeschaltet wird. Außerdem ist erfindungsgemäß sichergestellt, dass bei abgedeckter Strahlaustrittsöffnung ein Einschalten des Gerätes ausgeschlossen ist.

Strahlaustrittsöffnung bezeichnet die in der Stirnfläche und den Seitenwandungen vorhandenen Öffnungen, die ineinander übergehen sollten.

Eine konstruktiv einfache Lösung zeichnet sich dadurch aus, dass der Schalter bevorzugt ein Schiebeschalter mit Vorsprung, wie Steg, als das Betätigungselement ist und der Mitnehmer des Schiebelements eine Begrenzung der Aussparung ist, in die sich der vorspringende Abschnitt des Schalters erstreckt.

Hervorzuheben ist des Weiteren, dass ausschließlich dann, wenn das Abdeckelement sich in seiner Grundstellung befindet, in der die stirnseitige Strahlaustrittsöffnung abgedeckt ist, das Schiebeelement sowohl von der ersten Endstellung in die zweite Endstellung als auch von der zweiten Endstellung in die erste Endstellung verschiebbar ist.

Das Abdeckelement bzw. das Gehäuse sollte nur dann verschwenkt werden können, wenn sich das Schiebeelement in seiner zweiten Endstellung befindet.

Das Schiebelement weist zwei entlang der Seitenwandungen erstreckende Seitenschenkel und diese verbindende Querschenkel auf, die sich entlang der Kopf- und Bodenwandung erstrecken und die Seitenschenkel miteinander verbinden.

Um ein sicheres Führen des im Schnitt senkrecht zur Längsachse des Schiebelements eine Rechteckform aufweisenden Schiebeelements sicherzustellen, gehen von den Innenflächen der Seitenschenkel und den Querschenkeln des Schiebeelementes Vorsprünge aus, die in Längsrichtung des Gehäuses verlaufende Nuten eingreifen oder umgekehrt.

Insbesondere gehen von jedem Seitenschenkel und/oder Querschenkel, insbesondere sowohl von den Seitenschenkeln als auch von den Querschenkeln jeweils zwei Vorsprünge aus, die in entsprechende zwei Nuten in den Seiten-, Kopf- und Bodenwandungen eingreifen, um ein sicheres Führen des Schiebeelementes zu ermöglichen. Selbstverständlich können in eine Nut auch mehrere Vorsprünge eingreifen.

Die Vielzahl der Vorsprünge und Nuten stellen dem Grunde nach eine Überbestimmung dar. Allerdings wird hierdurch ungeachtet der möglichen Schwindung des Materials und des dünnwandigen Schiebeelements, das aus Kunststoff besteht, ein problemloses Verschieben ermöglicht.

Die Außenseite des Querschenkels des Abdeckelements kann in gewohnter Weise Montagehilfen, aufweisen, um das Gerät an einen Ort in gewünschter Position zu fixieren. Insbesondere sind als Montagehilfen Magnete vorgesehen.

Die Bodenwandung des Abdeckelements kann z.B. ein Anschlussgewinde aufweisen, um das Messgerät auf einem Stativ befestigen zu können.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung eines bevorzugten Ausführungsbeispiels.

Es zeigen:
- Fig. 1: einen Linienlaser in Betriebsstellung,
- Fig. 2: der Linienlaser gemäß Fig. 1 bei Nichtnutzung,
- Fig. 3: eine Seitendarstellung des Linienlasers gemäß der Fig. 1 und 2 in Betriebsstellung,
- Fig. 4: der Linienlaser gemäß den Fig. 1 bis 3 in nicht genutzter Stellung, und
- Fig. 5: Unterseite des Linienlasers mit zugeordnetem Schenkel eines Abdeckelements in auseinandergezogener Darstellung.

Die erfindungsgemäße Lehre eines Messgerätes 10 soll anhand eines Linienlasers erläutert werden.

Wie den Figuren zu entnehmen ist, weist das Messgerät 10 ein quaderförmiges Gehäuse 12 mit einer Kopfwandung 14, einer Bodenwandung 16, gegenüberliegenden Seitenwandungen 18, 20 sowie Stirnwandungen 22, 24 auf. In dem Gehäuse 12 ist im Ausführungsbeispiel eine schwerkraftbedingt selbsttätig aufrichtbare elektrooptische Einrichtung angeordnet, über die ein lotrechter bzw. waagerechter Laserstrahl erzeugbar ist, um eine lotrechte bzw. waagerechte Lichtlinie abbilden zu können.

Damit der Laserstrahl austreten kann, weist das Gehäuse 12 eine Öffnung 26 auf, die sich entlang der Stirnwandung 22, Abschnitten der angrenzenden Seitenwandungen 18, 20 sowie in der Kopfwandung 14 erstreckt, wie aus den Darstellungen selbsterklärend ersichtlich ist. Die entsprechenden Abschnitte 27, 29, 31, 33 der Öffnung 26, die von der Stirnwandung 22 in die Seitenwandungen 18, 20 und die Kopfwandung 14 übergeht, weist im horizontalen Schnitt des Gehäuses 12 eine U-Form auf. Der Bereich der Öffnung 26, die von der Stirnwandung 16 ausgehend in die Kopfwandung 14 übergeht, weist im vertikalen Schnitt und in Längsrichtung des Gehäuses eine L-Form auf.

Die Bodenwandung 16 weist gleichfalls eine Öffnung auf, um einen lotrechten Strahl abbilden zu können, der auch den Bereich 31 der Öffnung 26 in der Kopfwandung 14 durchsetzt.

Des Weiteren ist ein insbesondere auch als Handhabe oder Halterung dienendes Abdeckelement 28 vorgesehen, das eine U-Geometrie aufweist mit Querschenkel 30 und Seitenschenkeln 32, 34, die quer, insbesondere senkrecht, zu dem Querschenkel 30 verlaufen. Die Seitenschenkel 32, 34 und damit das Abdeckelement 28 sind um eine Achse 36 schwenkbar mit dem Gehäuse 12 verbunden und zwar mit der Kopfwandung 14 und der Bodenwandung 16. Die Schwenkachse 36 schneidet die Längsachse 38 des Gehäuses 12 senkrecht.

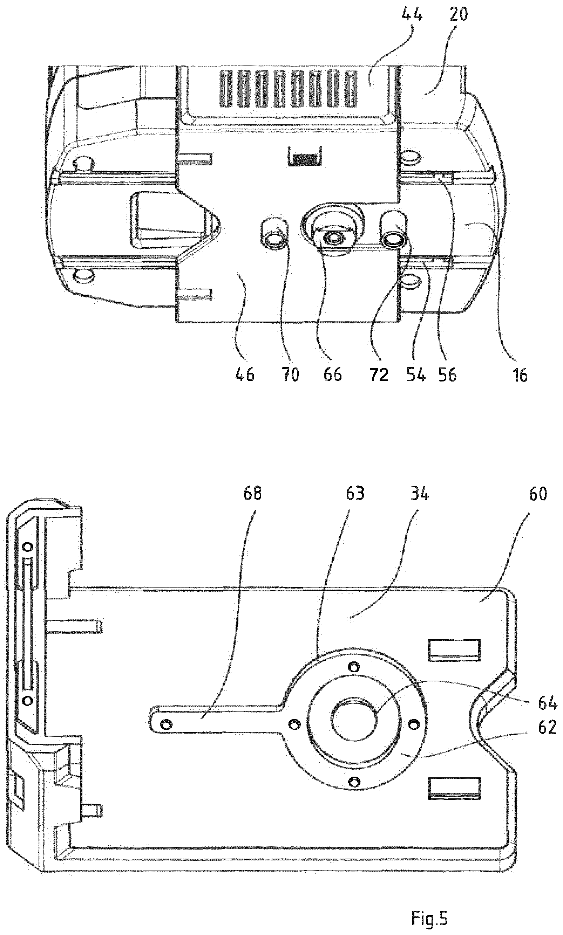

Um bei Nichtbenutzung des Gerätes 10 sicherzustellen, dass die Öffnung 26, also die Abschnitte 27, 29, 31, 33, sowie die im Boden verlaufende Laserstrahlaustrittsöffnung abgedeckt sind und gleichzeitig ein Verschwenken des Abdeckelements 28 bzw. des Gehäuses 12 zu dem Abdeckelement 28 ausgeschlossen ist, wird eine Konstruktion vorgeschlagen, die nachstehend im Zusammenhang mit der Fig. 5 erläutert wird. Hierzu ist ein Schiebeelement 40 vorgesehen, das entlang der Seitenwandungen 18, 20 verlaufende flächige Schenkel 42, 44 aufweist, die über einen entlang der Kopfwandung 14 verlaufenden Querschenkel 47 verbunden sind. Die Schenkel 42, 44 gehen des Weiteren in einen sich entlang der Bodenwandung 16 erstreckenden Querschenkel 46 über.

Das Schiebeelement 40 kann aus Kunststoff bestehen und dünnwandig sein. Andere Materialien, wie ein Blech, kommen gleichfalls in Frage.

Sind durch das Schiebeelement 40 die Abschnitte 27, 29 in den Seitenwandungen 18, 20 und die die Bodenwandung 16 durchsetzende Öffnung abgedeckt, erstreckt sich der Querschenkel 30 des Abdeckelements 28 entlang der öffnungsseitig verlaufenden Stirnwandung 22, wobei ein Verschwenken des Abdeckelements 28 bzw. des Gehäuses 12 ausgeschlossen ist, so dass die Laserstrahlaustrittsöffnungen vollständig geschützt sind und somit z.B. bei einem Herabfallen des Gerätes 10 eine Beschädigung ausgeschlossen ist. Dabei ist die Stirnwandung 22 durch den Querschenkel 30 des Abdeckelements 28 zuerst abgedeckt, um sodann zum Abdecken der verbleibenden Öffnungen bzw. deren Bereiche 27, 29, 31 das Schiebelement 40 in Richtung des Querschenkels 30 zu verschieben und in seiner ersten Endstellung zu positionieren.

Nach einem eigenerfinderischen Aspekt der Erfindung kann mittels des Schiebeelements 40 außerdem sichergestellt werden, dass bei abgedeckten Öffnungen ein ungewolltes Einschalten des Gerätes 10 ausgeschlossen ist bzw. bei einem ausgeschalteten Gerät 10 dieses nicht eingeschaltet werden kann, wenn die Öffnungen von dem Schiebelement 40 abgedeckt sind.

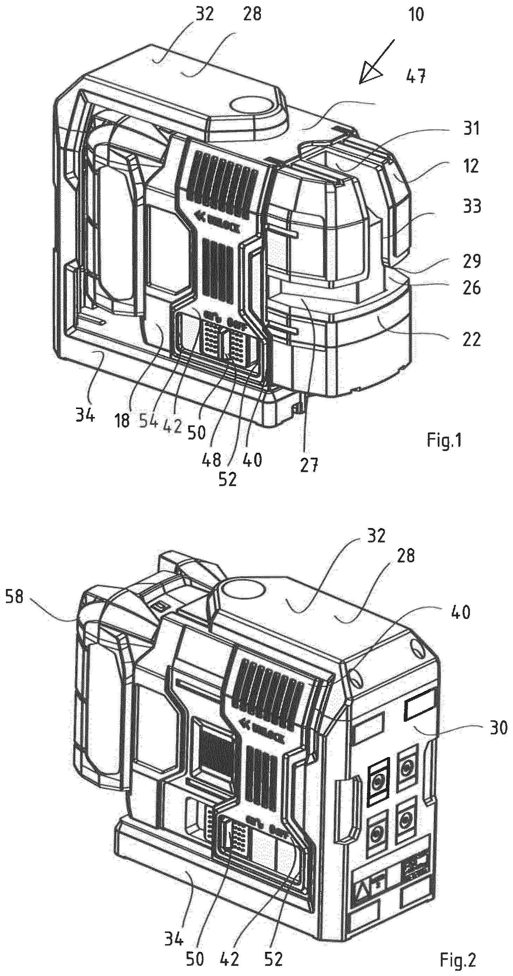

Wie den Fig. 1, 2 und 4 zu entnehmen ist, befindet sich in der Seitenwandung 18 ein Schalter 48, der im Ausführungsbeispiel als Schiebeschalter ausgebildet ist. Ein Verstellen des Schalters erfolgt in Längsachsenrichtung des Gehäuses 12.

Der Schalter 48 hat einen stegartigen Vorsprung 50, mit dem dieser betätigt werden kann. Der Vorsprung 50 als Betätigungselement erstreckt sich in einer Aussparung 52 des Schenkels 42 des Schiebeelements 40. Die Aussparung 52 hat eine Rechteckgeometrie, die von Rändern begrenzt sind, von denen ein Rand mit dem Bezugszeichen 54 gekennzeichnet ist, der senkrecht zur Längsachse 38 des Gehäuses 12 und sich entlang des Schenkels 42 des Schiebeelements 40 erstreckt. Dieser Rand 54 wirkt in nachstehender Weise mit dem Vorsprung 50 des Schalters 48 zusammen, um durch Verschieben des Schiebeelements 40 den Schalter 48 in die Stellung AUS automatisch zu verstellen, also das Gerät 10 auszuschalten, wenn die Abschnitte der Öffnung 26 in den Seitenwandungen (Abschnitte 27, 29) und teilweise einer in der Kopfwandung 14 (Abschnitt 31) über das Schiebeelement 40 und der Abschnitt 33 der Öffnung 26 in der Stirnwandung 22 durch den Querschenkel 30 des Abdeckelements 28 abgedeckt sind. Verbleibender Bereich der Öffnung in der Kopfwandung wird von dem Seitenschenkel 32 des Abdeckelements 28 abgedeckt.

Ein Verstellen des Schiebeelements 40 in die die in den Seitenwandungen 18, 20 verlaufenden Abschnitte 27, 29 der Öffnung 26 verschließenden Stellung kann jedoch nur dann erfolgen, wenn zum einen der Querschenkel 30 des Abdeckelements 28 sich entlang der Stirnwandung 22 erstreckt, also deren Seitenschenkel 32, 34 entlang der Boden- und der Kopfwandung 14, 16 ausgerichtet sind, so dass durch den Querschenkel 30 und den Seitenschenkeln 32, 34 die Öffnung in der Bodenwandung 16, der in der Stirnwandung 22 verlaufende Abschnitt 33 und der in der Kopfwandung 14 verlaufende Abschnitt 31 der Öffnung 26 abgedeckt sind.

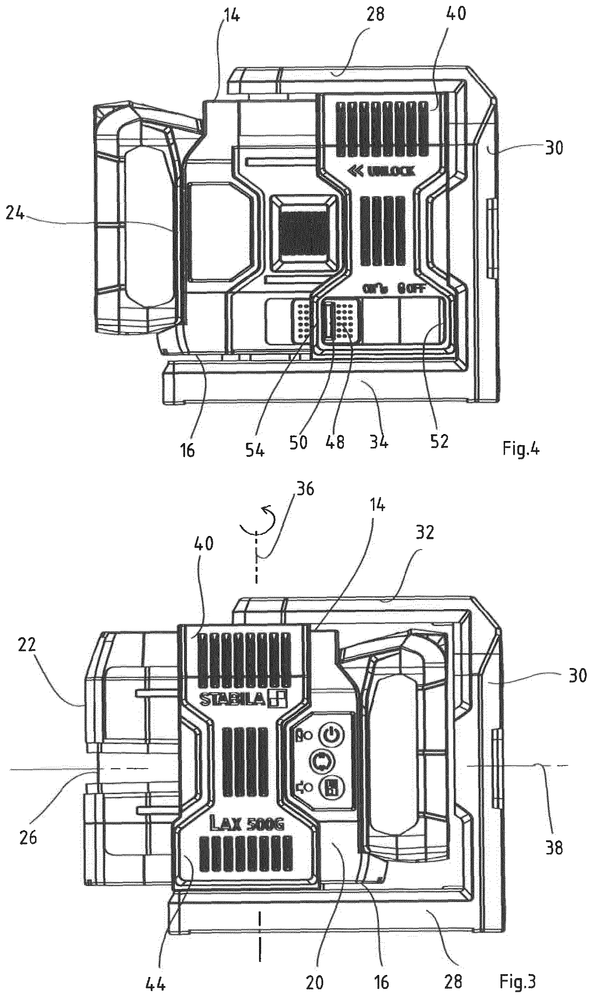

Ausschließlich in dieser Position des Abdeckelements 28 besteht auch die Möglichkeit, dass Schiebeelement 40 in Richtung der Stirnwandung 22 zu verstellen, um die in den Seitenwandungen 18, 20 verlaufenden Abschnitte 27, 29 der Öffnung 26 abdecken zu können. Bei diesem Verschieben wechselwirkt der Rand 54 der Öffnung 52 des Schiebeelementes 40 mit dem stegförmigen Abschnitt 50 des Schalters 48 derart, dass dieser in die Stellung AUS verstellt wird. Ein Anschalten des Gerätes 10 ist nunmehr nicht mehr möglich. Dies kann erst dann erfolgen, wenn das Schiebeelement 40 in die Stellung verstellt ist, die den Fig. 1, 3 zu entnehmen ist und in der die Möglichkeit besteht, das Abdeckelement 28 bzw. das Gehäuse 12 zu verschwenken, um die Öffnung 26 im gewünschten Umfang freizugeben und den Laserstrahl austreten zu lassen.

Um ein sicheres Führen des Schiebeelements 40 zu ermöglichen, gehen von den Innenseiten der Seiten- und Querschenkel 42, 44, 46, 48 Vorsprünge aus, die in Längsrichtung des Gehäuses 12 verlaufende Nuten eingreifen. Beispielhaft sind in der Fig. 5 in der Bodenwandung 16 Nuten 54, 56 dargestellt.

Auf der der Öffnung 26 gegenüberliegenden Rückseite des Gehäuses 12 kann ein Akku 58 einsteckbar sein, der mit der elektrooptischen Einrichtung in dem Gehäuse 12 verbunden ist.

In der Stellung, in der das Schiebeelement 40 die in den Seitenwandungen 18, 20 verlaufenden Abschnitte 27, 29 der Öffnung 26 verschließen und ein weiteres Verstellen des Schiebeelements 46 unterbunden ist, da dieses an dem Querschenkel 30 des Abdeckelements 28 anliegt, ist ein Verschwenken des Abdeckelements 28 ausgeschlossen. Somit ist das Gerät 10 problemlos transportierbar und die Gefahr eines unbeabsichtigten Einschaltens ausgeschlossen.

Dieses Nichtverschwenken wird anhand der Fig. 5 näher erläutert, in der die Bodenwandung 16 des Gehäuses 12 und die Innenseite 60 des Seitenschenkels 34 des Abdeckelements 28 gegenübergestellt sind. Von der Bodenwandung 16 geht ein zapfenförmiger Vorsprung 66 aus, um die das Abdeckelement 28 bzw. das Gehäuse 12 zu dem Abdeckelement 28 drehbar ist.

Die Innenfläche 60 des Seitenschenkels 34 weist eine Aussparung 64, wie Bohrung, auf, die konzentrisch von einer ringförmigen Aufnahme 62 umgeben ist. In die als zweite Aussparung bezeichnete Aussparung 64 greift der zapfenförmige Vorsprung 66, der als zweiter Vorsprung bezeichnet wird, ein, um erwähntermaßen das Abdeckelement 28 bzw. das Gehäuse 12 verschwenken zu können. Von der ringförmigen Aufnahme 62, die eine Vertiefung in der Innenfläche 60 des Seitenschenkels 34 ist, geht eine entlang einer Geraden verlaufende - erste - Aussparung, wie Nut 68, aus, die in Längsrichtung des Schenkels 34 des Abdeckelements 28 verläuft. Von der Außenseite des Querschenkels 46 des Schiebenelements 40 geht ein - erster - Vorsprung 70 aus, der auf die Nut 68 ausgerichtet sein muss, um ein Verschieben des Schiebelementes 40 zu ermöglichen. Dies ist dann der Fall, wenn das Abdeckelement 28 sich in seiner Grundstellung befindet, in der die Seitenschenkel 32, 34 mit ihren Längsachsen auf die Längsachse 38 des Gehäuses 12 ausgerichtet sind, sich die Seitschenkel 32, 34 also entlang der Kopfwandung 14 und der Bodenwandung 16 erstrecken. Gleichzeitig ist sodann der Querschenkel 30 auf die Stirnwandung 22 des Gehäuses 12 ausgerichtet und deckt diese ab, so dass die Abschnitte 31, 33 der Öffnung 26 abgedeckt sind, die sich entlang der Stirnwandung 26 und der Kopfwandung 40 erstrecken. Der Vorsprung 70 ist sodann auf die Nut 68 ausgerichtet, so dass das Schiebelement 40 in Richtung der Stirnfläche 22 und somit dem Querschenkel 30 verschoben werden kann, und zwar in einem Umfang, bis der äußere Rand des Schiebeelements 40 an dem Querschenkel 30, d.h. dessen Seitenrändern anliegt. Dies sollte die erste Endstellung des Schiebeelementes 40 sein. Durch das Eingreifen des Vorsprungs 70 in die Nut 68 ist ein Verschwenken des Abdeckelements 28 bzw. des Gehäuses 12 nicht mehr möglich.

Um ein Verschwenken zu erlauben, muss das Schiebeelement 40 in seine zweite Endstellung, wie diese in der Fig. 1 dargestellt ist, verschoben worden sein. Gleiches ergibt sich aus der Seitenansicht gemäß Fig. 3. In dieser Position gelangt der Vorsprung 70 in Ausgriff mit der Nut 68 mit der Folge, dass ein Verschwenken des Abdeckelements 28 möglich ist. Gleichzeitig ist bei verschwenktem Abdeckelement 28 ein Verschieben des Schiebeelements 40 ausgeschlossen, da der Vorsprung 70 beim Versuch eines Verstellens gegen den umlaufenden Rand 63 der Aufnahme 62 stoßen würde. Somit wird durch die Aufnahme 62 mit der von dieser ausgehenden linienförmigen Nut 68 eine Doppelfunktion erfüllt, die entweder das Verschwenken des Abdeckelements 28 bzw. des Gehäuses 12 oder ein Verschieben des Schiebeelements 40 zulässt.

Eine Abstützung beim Verschwenken bildet des Weiteren ein von der Bodenwandung 16 des Gehäuses 12 abragender Vorsprung 72, der beim Verschwenken des Abdeckelements 28 an der Begrenzung 63 der Aufnahme 62 anliegt.

Das auch als Handhabe oder Halterung dienende Abdeckelement 28 weist Montagefixiermittel auf, um das Gerät 10 in einer gewünschten Position anzuordnen. Insbesondere handelt es sich bei dem Montagefixiermittel um Magnete.

Des Weiteren kann in der Bodenwandung 16 z.B. ein Anschluss vorhanden sein, um das Gerät auf einem Stativ fixieren zu können.

## Patentansprüche

1. Messgerät (10), insbesondere Linienlaser, aufweisend ein Gehäuse (12) mit einer ersten und einer zweiten Seitenwandung (18, 20), einer ersten und einer zweiten Stirnwandung (22, 24), einer Kopfwandung (14) und einer Bodenwandung (16), die jeweils eine Außenfläche aufweisen, wobei eine der Stirnwandungen und zumindest eine an dieser angrenzende Seitenwandung, insbesondere beide Seitenwandungen, eine Öffnung (26) für einen Strahlaustritt aufweisen, ein schwenkbar mit dem Gehäuse verbundenes Abdeckelement (28), das sich in einer Grundstellung zumindest abschnittsweise entlang der die Öffnung aufweisenden Stirnwandung und der Boden- und/oder Kopfwandung erstreckt,
**dadurch gekennzeichnet,**
**dass** entlang der die Öffnung (26, 27, 29) aufweisenden Seitenwandung (18) oder Seitenwandungen (18, 20) ein Schiebeelement (40) verschiebbar angeordnet ist, dass das Schiebeelement bei sich in der Grundstellung befindendem Abdeckelement (28) in eine die Öffnung in der Seitenwandung oder den Seitenwandungen verschließenden ersten Endstellung verschiebbar ist, und dass das Abdeckelement bei sich in der ersten Endstellung befindendem Schiebeelement unverschwenkbar ist.

2. Messgerät nach Anspruch 1
**dadurch gekennzeichnet,**
**dass** von entlang der Bodenwandung (16) des Gehäuses (12) verlaufendem Abschnitt des Schiebeelements (40) ein erster Vorsprung (70) ausgeht, dass in einem sich entlang der Bodenwandung erstreckenden Abschnitt des Abdeckelements (28) eine entlang einer Geraden sich erstreckende erste Aussparung (64) verläuft, in der der erste Vorsprung ausschließlich dann verschiebbar ist, wenn das Abdeckelement die Stirnwandung (22) des Gehäuses (12) mit der in dieser vorhandenen Strahlaustrittsöffnung (26) abdeckt, wobei bei Eingriff des ersten Vorsprungs in die erste Aussparung ein Verschwenken des Abdeckelements unterbunden ist und bei Außereingriff des ersten Vorsprungs und der ersten Aussparung das Abdeckelement verschwenkbar ausgebildet ist bei gleichzeitiger Unverschiebbarkeit des Schiebelements (40).

3. Messgerät nach Anspruch 1 oder 2,
**dadurch gekennzeichnet,**
**dass** von der Bodenwandung (16) des Gehäuses (12) ein zapfenförmiger zweiter Vorsprung (66) ausgeht oder von diesem durchsetzt ist, um dem das Abdeckelement (28) dreh- bzw. schwenkbar ist, dass der zweite Vorsprung (66) in eine zweite Aussparung (64), wie Durchgangsöffnung, des Abdeckelements (28) eingreift bzw. diese durchsetzt, dass die zweite Aussparung von einer Aufnahme (62) konzentrisch umgeben ist, von der die sich in Längsrichtung des Abdeckelements verlaufende sich entlang einer Geraden erstreckende erste Aussparung (68), wie Nut, ausgeht, und dass von dem sich entlang der Bodenwandung erstreckenden Schenkel (46) des Schiebeelements (40) der erste Vorsprung (70) ausgeht, der ausschließlich bei auf die die Öffnung (26) aufweisende Stirnwandung (22) ausgerichtetem Querschenkel (30) des Abdeckelements in der ersten Aussparung verschiebbar ist.

4. Messgerät nach zumindest einem der Ansprüche 1 bis 3,
**dadurch gekennzeichnet,**
**dass** die Aufnahme (62) eine äußere Begrenzung (63) aufweist, an der der von dem Querschenkel (46) des Schiebeelements (40) ausgehende erste Vorsprung (70) bei aus der Grundposition verschwenktem Abdeckelement (28) anliegt oder in geringem Abstand zu dieser verläuft.

5. Messgerät vorzugsweise nach zumindest einem der vorhergehenden Ansprüche, wobei das Messgerät einen Schalter (48) zum An- und Ausschalten aufweist,
**dadurch gekennzeichnet,**
**dass** der Schalter (48) von einer der Seitenwandungen (18) ausgeht, dass entlang der Seitenwandung das Schiebeelement (40) verstellbar ist, das mit dem Schalter derart wechselwirkt, dass bei die die Seitenwandung bzw. Seitenwandungen (18, 20) durchsetzende Öffnung bzw. Öffnungen (27, 29) abgedecktem Schiebeelement sich der Schalter in seiner Stellung AUS befindet und ein Umschalten unterbunden ist und sich das Schiebeelement in der ersten Endstellung befindet, und dass das Schiebeelement in eine zweite Endstellung verstellbar ausgebildet ist, in der die Öffnung von dem Schiebeelement unbedeckt und der Schalter umschaltbar ist.

6. Messgerät nach zumindest Anspruch 5,
**dadurch gekennzeichnet,**
**dass** der Schalter (48) ein Betätigungselement (50) zum Umschalten des Schalters von seiner Stellung EIN in die Stellung AUS und umgekehrt aufweist, dass das Schiebeelement (40) eine Aussparung (52) aufweist, die von dem Betätigungselement durchsetzt ist und die einen mit dem Betätigungselement wechselwirkenden Mitnehmer (54) aufweist derart, dass bei sich in der ersten Endstellung befindendem Schiebeelement das Verstellen des Betätigungselements des Schalters aus der Stellung AUS unterbunden ist.

7. Messgerät nach zumindest einem der vorhergehenden Ansprüche,
**dadurch gekennzeichnet,**
**dass** der Schalter (48) ein Schiebeschalter mit vorspringendem Abschnitt (50), wie Steg, als das Betätigungselement ist, und dass der Mitnehmer (54) eine Begrenzung (54) der Aussparung (52) ist.

8. Messgerät nach zumindest einem der vorhergehenden Ansprüche,
**dadurch gekennzeichnet,**
**dass** beim Verstellen des Schiebeelements (40) aus der zweiten Endstellung in die erste Endstellung bei sich in Stellung EIN befindlichem Schalter dieser durch Wechselwirken des Betätigungselements mit dem Mitnehmer des Schalters (48) von der Stellung EIN in die Stellung AUS umgeschaltet wird.

9. Messgerät nach zumindest einem der vorhergehenden Ansprüche,
**dadurch gekennzeichnet,**
**dass** ausschließlich dann, wenn das Abdeckelement (28) sich in seiner die die Stirnwandung (22) durchsetzende Öffnung (33) abdeckender Grundstellung befindet, das Schiebelement (40) sowohl von der ersten Endstellung in die zweite Endstellung als auch von der zweiten Endstellung in die erste Endstellung verschiebbar ist.

10. Messgerät nach zumindest einem der vorhergehenden Ansprüche,
**dadurch gekennzeichnet,**
**dass** das Abdeckelement (28) ausschließlich bei sich in der zweiten Endstellung befindendem Schiebeelement (40) verschwenkbar ist.

11. Messgerät nach zumindest einem der vorhergehenden Ansprüche,
**dadurch gekennzeichnet,**
**dass** das Schiebelement (40) einen ersten und einen zweiten Seitenschenkel (42, 44) aufweist, die über zumindest einen sich entlang der Kopf- und/oder Bodenwandung (14, 16) des Gehäuses (12) sich erstreckenden Querschenkel (47), insbesondere sowohl entlang der Kopfwandung als auch der Bodenwandung des Gehäuses (12) sich erstreckende Querschenkel (46, 47), verbunden sind.

12. Messgerät nach zumindest einem der vorhergehenden Ansprüche,
**dadurch gekennzeichnet,**
**dass** von den Seitenschenkeln (42, 44) und dem zumindest einen Querschenkel (46, 47) des Schiebeelements (40) jeweils zumindest ein Vorsprung ausgeht, der bei Verschieben des Schiebeelements (40) geführt von in den zugewandten Wandungen (14, 16, 18, 20) des Gehäuses (12) in Längsrichtung des Gehäuses (12) verlaufende Nuten (54, 56) eingreifen oder umgekehrt.

13. Messgerät nach zumindest einem der vorhergehenden Ansprüche,
**dadurch gekennzeichnet,**
**dass** die der Öffnung (26) gegenüberliegende Stirnwandung (24) des Gehäuses (12) eine Aufnahme für einen Akku (58) aufweist.

14. Messgerät nach zumindest einem der vorhergehenden Ansprüche,
**dadurch gekennzeichnet,**
**dass** das Abdeckelement (28) eine U-Form mit entlang der auf die die Öffnung (26) aufweisenden Stirnwandung (22) ausrichtbarem Querschenkel (30) und von diesem ausgehenden entlang der Kopf- und/oder Bodenwandung (14, 16) sich erstreckenden Seitenschenkeln (32, 34) aufweist, die ihrerseits von einer Achse (36) zum Verschwenken des Abdeckelements bzw. des Gehäuses 12 durchsetzt sind.

15. Messgerät nach zumindest einem der vorhergehenden Ansprüche,
**dadurch gekennzeichnet,**
**dass** sich die Achse (36) zwischen der die Öffnung (26) aufweisenden Stirnwandung (22) und Außenwandung eines von der gegenüberliegenden Stirnwandung (24) ausgehenden Akkus (58) derart verläuft, dass das Abdeckelement (28) bzw. das Gehäuse (12) um 360 ° schwenkbar ist.
